# EUROPEAN PATENT SPECIFICATION

(11) **EP 1 108 516 B1**
(45) Date of publication and mention of the grant of the patent: **06.10.2004**
(21) Application number: 99905335.8
(22) Date of filing: 01.03.1999
(51) Int. Cl.: B29C 45/14, B29C 45/26

(54) **INSERT PART STUCK CYLINDRICAL ARTICLE, ITS FORMING METHOD, AND ITS FORMING DEVICE**
ZYLINDRISCHER GEGENSTAND MIT FIXIERTEM EINSATZSTÜCK, SOWIE VERFAHREN UND GERÄT ZU DESSEN HERSTELLUNG
ARTICLE CYLINDRIQUE A PIECE D'INSERTION IMMOBILISEE, SON PROCEDE DE FORMAGE, ET DISPOSITIF DE FORMAGE

(43) Date of publication of application: 20.06.2001
(73) Proprietor: Yoshino Kogyosho Co., Ltd., Tokyo 136-8531 (JP)
(72) Inventor: KIMURA, Hideyuki, Koto-ku Tokyo 136-8531 (JP); NOMOTO, Tsugio, Koto-ku Tokyo 136-8531 (JP)
(74) Representative: Gray, James
(86) International application number: PCT/JP1999/000986
(87) International publication number: WO 2000/051802

(56) References cited:
- JP-A- 6 246 777
- JP-A- 11 058 445
- JP-Y2- 2 579 741
- US-A- 4 834 638
- US-A- 5 443 767

## Description

The present invention relates to insert-bonded cylindrical articles each comprising a cylindrical molded body made from a synthetic resin and a sheet-shaped insert integrally bonded to an outer peripheral surface of the cylindrical molded body, a molding method and a molding apparatus therefor. In particular, the present invention relates to insert-bonded cylindrical articles each obtained by placing an insert such as a label in a molding space of a molding mold and then injecting a molten resin into the molding space, and also to a molding method and a molding apparatus therefor. Background art

In order to produce articles in which a sheet-shaped label is bonded to the surface of a molded body made of a synthetic resin, a method has been widely and generally used, which comprises forming molded body by injection molding or blow molding, opening a molding mold to remove the molded body, and manually bonding adhesive-applied labels to outer peripheral surfaces of thus obtained molded bodies one by one or automatically bonding the labels to them by a label-bonding machine.

However, the former manually label-bonding method has the problems in that the manually label-bonding makes the workability worse, and is likely to cause variations in the bonding precision depending upon working persons. As compared with the former manual working, the latter automatically bonding method with the bonding machine has improved workability and the bonding precision can be enhanced by diminishing variations. However, the latter method is disadvantageous from the standpoint of the cost in that the machine is of a large scale, and needs a large machine cost. Further, since the labels are bonded in both of these bonding methods after the synthetic resin-molded bodies are molded, the bonding work itself unfavorably becomes troublesome.

Under these circumferences, JP-A 63-242,613 and EP-A-4 810 90 disclose methods in which label bonding is effected simultaneously with molding the synthetic resin during the molding step, while the troublesome work of forming the above molded body and then bonding label to the surface of the molded body is omitted. According to these publications, a so-called insert molding is effected, which preliminarily placing a label or the like in a molding mold, blow-molding or injection molding a resin and integrating the molded body and the label or the like.

However, although no great problem occurs in the production of the insert molded body by the blow molding as in the former JP-A 63-242,613, close attention is needed when the insert molded body is produced by the injection molding as in the latter EP-A-481 090, because the molten resin oozes out to the surface side of the label, and the label is wrinkled.

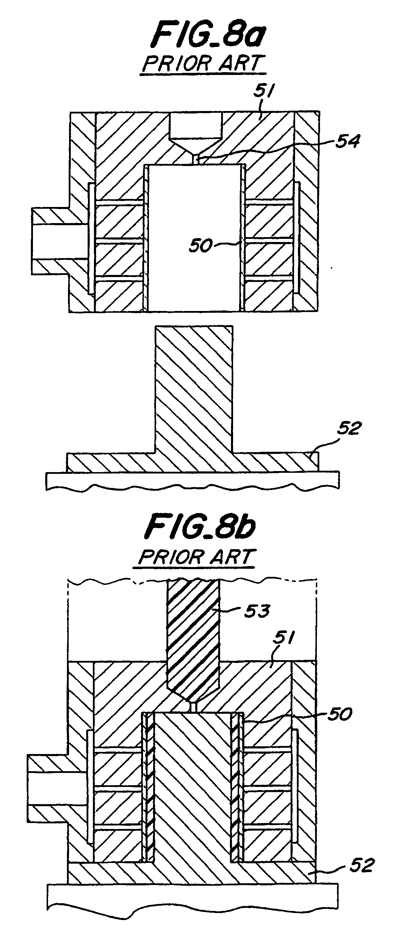

When an insert molded body is to be produced by injection molding, an insert 50 such as a label or the like is inserted into a predetermined position of an inner surface 51 of an outer mold 51 as shown in Fig. 8(a) in the state that a molding mold units 51 and 52 are opened, the label is fixed by suction or the like, and injecting the molten resin into a molding cavity of a mold by an injection molding machine 53 after the molding mold units 51 and 52 are closed as shown in Fig. 8(b).

When the molten resin is to be injected into the molding space inside the molding mold, the molten resin is generally injected into the molding cavity through a gate portion 54 provided at an end portion of the molding space. In this case, the molten resin may flow to the surface of the label owing to various factors such as the label 50 being not closely attached the shape of the end portion of the label, the shape of the end portions of the label, the relationship among the flow, the pressure, etc. of the resin.

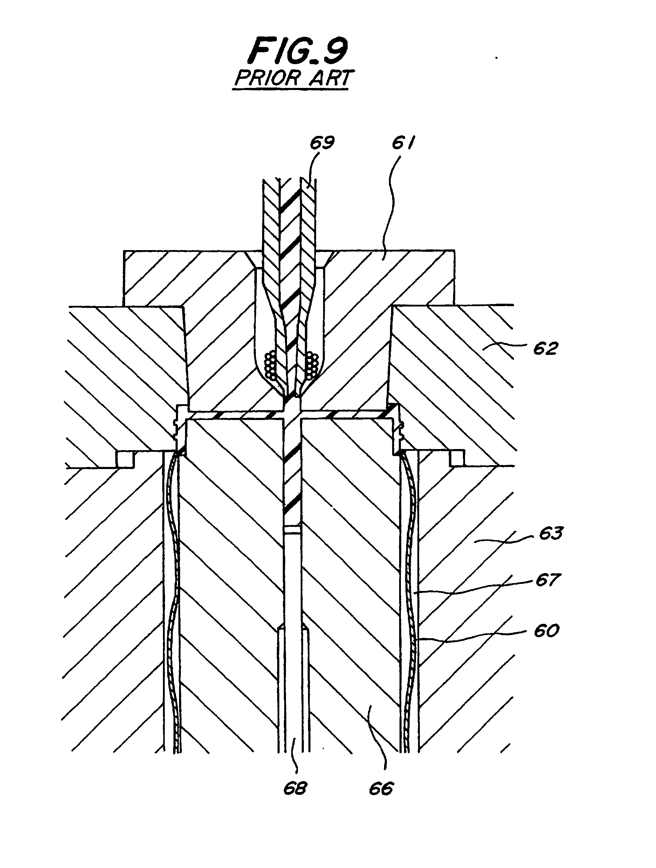

Fig. 9 is a sectional view of an apparatus for producing a conventional label-bonded cylindrical molded article, which is used for effecting the insert label molding for a cylindrical molded body by injection molding. In the figure, 61 is a molding mold end disc, 62 a mouth portion-molding mold unit for forming a mouth portion of the cylindrical molded body, 63 a barrel portion-molding mold unit, 66 a core, 67 a molding cavity, 67 a mold cavity, 68 a knock-out pin, and 69 an injection nozzle. As shown in Fig. 9, a molten resin is injected through the injection nozzle 69 and an upper end portion of the molding space, it is likely that the molten resin enters between the surface of the label 60 and the barrel portion-molding mold unit 63 and the molten resin pushes down the label 60. Consequently, unacceptable products were often produced.

As countermeasures for removing causes resulting in occurrence of such unacceptable products, the insert is prevented from being deformed or moved by imparting a force resisting the flow of the molten resin through increasing the thickness of the insert such as label or by firmly closely attaching the insert to the inner surface of the molding cavity with the provision of a vacuum sucking means in the molding mold as shown in Figs. 8(a) and 8(b).

However, if the insert is made thicker, the cost of the material becomes higher. On the other hand, when the molding mold is provided with the vacuum sucking means to suck the insert 50, 60 such as the label to the inner surface of the molding cavity, the molding apparatus becomes complicated. Therefore, each of these cases results in the increased cost of the products.

In order to simplify the structure of the molding mold to be used for the above insert molding, outer molds of a split mold structure are generally used. However, if molding is effected with such a molding mold, a parting line of the molding mold can not be prevented from being formed at the surface of the molded body. Problems to be solved by the invention

The present invention is to provide an injection molding method and a molding apparatus therefor, which prevent the molten resin from entering between the surface of the sheet-shaped insert such as a label including a printed film or the like and the surface of the outer mold unit and also prevent the insert from being deviated from a predetermined position at the inner surface of the outer mold unit or from being wrinkled by pushing down the insert with the molten resin, when the insert is bonded to the insert-bonded synthetic resin molded body is injection molded by the insert molding. Further, the present invention also relates to the insert-bonded cylindrical article obtained by the above injection molding method.

These problems are solved with a product according to claim 1, a method according to claim 3 and an apparatus according to claim 7.

According to a preferred embodiment of the insert-bonded cylindrical article of the present invention, the insert is bonded to a circumferentially entire outer peripheral surface of the cylindrical molded body, and the mark of the injection gate opening is located in a position avoiding a butted portion of both side portions of the insert.

Following are recited as preferred embodiments of the method for molding the insert-bonded cylindrical article of the present invention. Features of any combination of the following (1) to (3) are considered to be preferred embodiments of the molding method according to the present invention, so long as no contradiction occurs.
(1) The insert is fitted, closely attached and held along a circumferentially entire inner peripheral surface of the cavity of the outer molding unit, and the molten resin is injected toward a position avoiding a butted portion of both side portions of the insert.
(2) A knock-out pin is provided in the core, and the method further comprises upwardly pulling out the pull-out mold unit of the outer mold unit after the insertion molding, cutting connection between the cured resin inside the injection gate opening and the cylindrical molded body by raising the knock-out pin, and removing the cylindrical article from the core by pushing a bottom portion of the cylindrical molded body. More preferably, the connection between the cured resin in the injection gate opening and the cylindrical molded body is cut by raising the knock-out pin, and simultaneously the cylindrical molded body is removed from the core by pushing up the bottom of the cylindrical article.
(3) The insert is fitted, closely attached and held in a cylindrical shape along the inner peripheral surface of the outer mold unit in the molding cavity inside the injection molding mold by partially fitting the insert in a cylindrical shape into the outer mold unit of the mold in a state that the core of the injection molding mold is pulled out from the outer mold unit and the molding cavity is opened, forwardly moving the core into the outer mold unit, and applying a contact frictional force between the core and the insert.

Following are recited as preferred embodiments of the molding apparatus according to the present invention. Features of any combination of the following (1) to (4) are considered to be preferred embodiments of the molding method according to the present invention, so long as no contradiction occurs.
(1) The insert-bonded cylindrical article has a mouth portion, and the end portion-molding mold unit comprises a molding mold end disc, as the pull-out mold unit, having a molten resin-injecting opening, and a mouth portion mold unit to be engaged with the mold end disc and form the mouth portion of the cylindrical article.
(2) Radial molten resin runner grooves are formed at a joint face between one end of the core and the end portion-molding mold unit, and one end opening of the gate hole is to communicate with end portions of the running grooves.
(3) The outer mold comprising a stopper mold movable axially and adapted to form the other end of the cylindrical molded body, and the releasing tool is said stopper mold.
(4) The releasing tool further comprises a knock-out pin provided movably forwardly and rearwardly in a central portion of the core, and connection between the cured resin inside the injecting gate opening and the cylindrical molded body is cut by raising the knock-out pin.

### Brief Description of the Drawings

Fig. 1 is a sectional view for schematically illustrating the method and apparatus for molding the sheet-shaped insert-bonded cylindrical article according to the present invention.
Fig. 2 is a sectional view of showing a preferred embodiment of the apparatus for molding the sheet-shaped insert-bonded cylindrical article according to the present invention.
Fig. 3 is a sectional view taken along III-III of the sheet-shaped insert-bonded cylindrical article.
Fig. 4 is a sectional view for illustrating a step for inserting the sheet-shaped insert into a space in the outer mold unit in the state that the molding apparatus in Fig. 2 is opened.
Fig. 5 is a sectional view for illustrating a state in which the sheet-shaped insert-bonded article is injection molded after the molding apparatus in Fig. 2 is closed.
Fig. 6 is a sectional view for illustrating a state in which the sheet-shaped insert-bonded article is released from the mold after the molding apparatus in Fig. 2 is opened.
Fig. 7 is a perspective view of the sheet-shaped insert-bonded article molded according to the present invention.
Figs. 8(a) and 8(b) are sectional views for showing conventional insert injection molding apparatuses.
Fig. 9 is a sectional view for illustrating a case where the injection molding is effected by using the conventional insert injection molding apparatus shown in Figs. 8(a) and 8(b).

### Best Mode of Carrying out the Invention

In the following, best embodiments of the present invention will be explained with reference to the drawings.

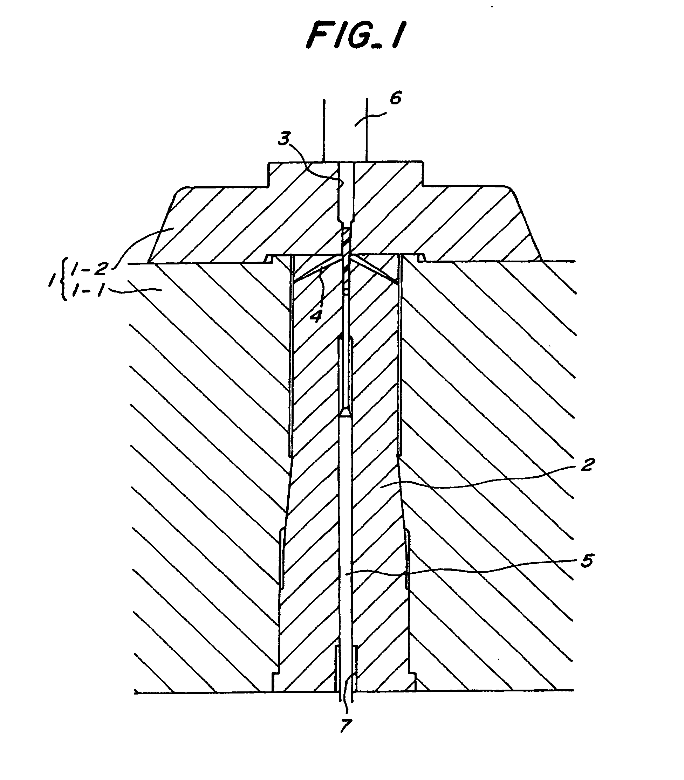

First, the molding method and the molding apparatus according to the present invention will be explained with reference to a sectional view of the sheet-shaped insert-bonded cylindrical article-producing apparatus schematically shown in Fig. 1. The sheet-shaped insert-bonded cylindrical article-molding apparatus according to the present invention comprises an outer mold unit 1 having a core-inserting space, a core 2 to be inserted into the core-inserting space of the outer mold unit 1 from one end of the outer mold unit and defining a molding cavity between the inner peripheral surface of the outer mold unit, and a releasing tool for releasing the resulting insert-bonded cylindrical article from the mold.

The outer mold unit 1 comprises a barrel portion-molding mold unit 1-1 having the core-inserting space and an end portion molding mold unit 1-2 to be detachably engaged with the other end of the barrel portion-molding mold unit 1-1, having a molten resin injection opening 3 and being movable outwardly from the end portion. The core 2 has a gate hole 4 that communicates with the molten resin injection opening 3 at one end, and has the other end located at an outer peripheral surface of the core and at a position axially inwardly from an end of the insert fitted along the inner peripheral surface of the core-inserting space. The releasing tool comprises a knock-out pin 5 arranged movably forwardly and rearwardly in a through-hole that is provided in a central portion of the core and communicates with one end of the molten resin injection opening 3. A reference numeral 6 denotes an injection nozzle of an injection device for supplying the molten resin into the molten resin injection opening 3 of the end portion-molding mold unit 1-2. Fig. 1 shows a mold-closed state of the molding apparatus.

First, the core 2, which is an inner mold unit of the injection molding mold for molding the thin cylindrical article, is pulled out from the outer mold unit 1, thereby opening the mold. In this state, an insert is rounded, inserted and fitted along the inner peripheral surface of the outer mold unit 1 of the injection molding mold. When the cylindrically rounded insert is fitted into the molding cavity, the insert is opened radially outwardly and closely fitted and held into the molding cavity. When the cylindrically rounded insert is to be inserted, the insert is inserted in a cylindrical shape up to an appropriate location of the cavity-forming surface of the outer molding unit 1, the core 2 is then advanced into the outer mold unit 1, and the insert is inserted into a predetermined location inside the molding cavity through a contact frictional force between the insert and the core 1. The molding mold apparatus is closed by completely fitting the core into the outer mold unit, so that the molding cavity capable of molding the cylindrical article is defined between the outer mold unit and the core.

After the molding apparatus is closed, the injection nozzle 6 of the injection device is connected to an upper portion of the molten resin injection opening 3 of the end portion-molding mold unit 1-2 of the outer mold unit 1, and then the molten resin is injected toward the inner surface of the insert from the injection nozzle 6 of the injection device through the molten resin injection opening 3 of the end portion-molding unit 1-2 and the injection gate hole 4 provided in the core 2. Thereby, the molten resin is injected into the molding cavity, while pushing the insert to the inner peripheral surface of the outer mold unit. Thereafter, the cylindrical molded body is formed through curing. As a result, the insert-bonded cylindrical article comprising the cylindrical molded body and the insert integrally bonded to the outer peripheral surface of the barrel portion of the cylindrical molded body is molded. In this case, the phrase "the molten resin is injected toward the inner surface of the insert" means that the molten resin is injected to an inner surface position inwardly from ends of the insert through the gate opening provided slightly axially inwardly from a tip end of the core 2 and provided at a position inwardly from both side portions of the insert. By so doing, the molten resin injected is prevented from entering between the inner peripheral surface of the outer mold unit and the insert in the molding cavity.

Further, the molten resin injected can be more assuredly prevented from entering between the inner peripheral surface of the outer mold unit and the insert in the molding cavity by appropriately setting the size and the arranging position of the insert, the position of the injection gate opening, the injection speed and the pressure of the molten resin, etc. When the insert is fitted, closely attached and held along the almost entire inner peripheral surface of the cavity of the outer mold unit and the molten resin is injected to a position that is axially inwardly from an end of the insert and avoids a butted portion of the opposite side portions of the insert, the molten resin injected can be more assuredly prevented from entering between the inner peripheral surface of the outer mold unit and the insert in the molding cavity.

Thereafter, the injection nozzle of the injection device is removed from the molten resin injection opening, and the end portion-molding mold unit 1-2 and the barrel portion-molding apparatus 1-1 are upwardly moved away, thereby opening the molding apparatus. Then, the knock-out pin 17 is pushed upwardly, the cured resin inside the injection gate hole which is attached to the inner surface of the insert-bonded cylindrical article is cut off, and the insert-bonded cylindrical article formed on the outer peripheral surface of the core is removed by an appropriate means not shown.

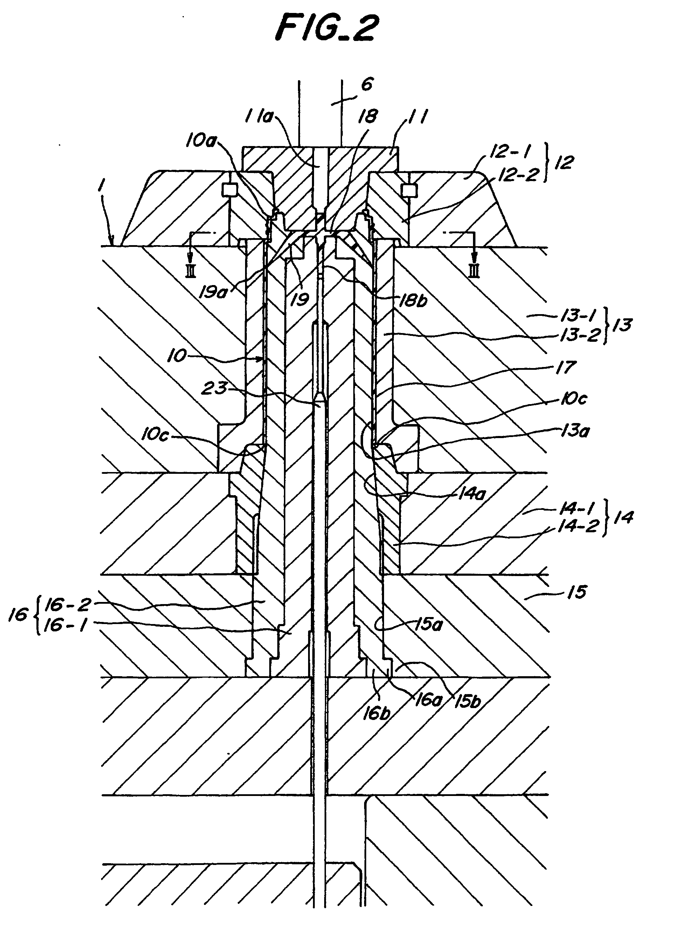

In the following, one best embodiment of the method and the apparatus for molding the label-attached cylindrical article by injection molding using the injection molding method will be explained with reference to Figs. 2 to 6.

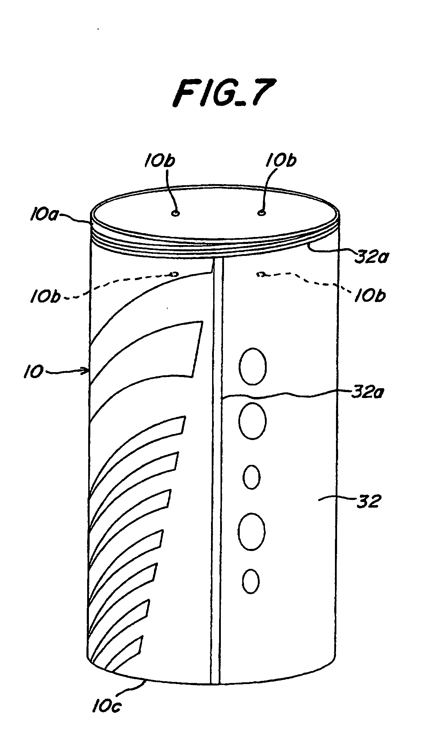

The insert-bonded cylindrical article injection mold according to the present invention is to insert mold a sheet-shaped insert cylindrical article 10 having a mouth portion 10a at one end by injection molding (See Fig. 7). As mentioned above, a molding mold comprises an outer mold, a core and a releasing tool. As shown in Fig. 2, an end portion-molding mold unit 1-2 comprises an end disc 11 as an upper portion-molding mold unit having an injection opening 11a to which the nozzle 6 of the injection molding device is fitted and a mouth-molding mold unit 12 of a laterally split type which surrounds and engages with the end disc and is adapted to mold a mouth portion 10a of the cylindrical article 10.

The outer mold unit further comprises a barrel portion-molding unit 13 to which the mouth-molding mold unit 12 is detachably butted and which is adapted to form a barrel portion of the cylindrical article, and a stopper mold unit 14 which is located under the barrel portion-molding unit 13 and butted to an end of the molding unit 13. The barrel portion-molding unit 13 and the stopper mold unit 14 form the barrel portion and a bottom end face of the cylindrical article, respectively. The barrel portion-molding unit 13 and the stopper mold unit 14 are fixed and supported by a bottom disc 15 of the molding mold. A member immediately under the bottom disc 15 of the molding mold is a stationary plate through which a knock-out pin is passed. The barrel portion-molding mold unit 13, the stopper mold unit 14 and the bottom disc 15 are provided with concentric inner cavities 13a, 14a and 15a, respectively, through which the core 6 is introduced forwardly and rearwardly from the lower side.

The molding inner cavity 14a of the stopper mold unit 14 is designed as a plane tapered in section that is inclined outwardly in a downward direction, and can closely contact a corresponding inclined face of the core 16. The core is provided with a flange 16a at a lower end portion thereof, which engages with a recess 15b of the bottom disc 15 of the molding mold at a lower inner end portion to stop rise of the core 16. When the core 16 is completely inserted into the molding inner cavities 13a, 14a and 15a, the upper end of the core closely contacts the end disc 11 and the mouth portion-molding mold unit 12 of the upper mold unit, so that a molding cavity is defined between the core 16 and the mouth portion-molding mold unit 12 for molding the mouth portion 10a of the cylindrical article and that a molding cavity is formed between the core 16 and the molding inner cavity 13a of the barrel portion molding mold unit 13 for molding the barrel portion of the cylindrical article. Considering heat resistance, wear resistance, etc. in molding the molten resin, each of the mouth portion-molding mold unit 12, the barrel portion-molding mold unit 13, the stopper mold unit 14 and the core 16 comprises a surface portion (12-1, 13-1, 14-1, 16-1) made of a heat-resistance and wear-resistant alloy and a main body (12-2, 13-2, 14-2, 16-2).

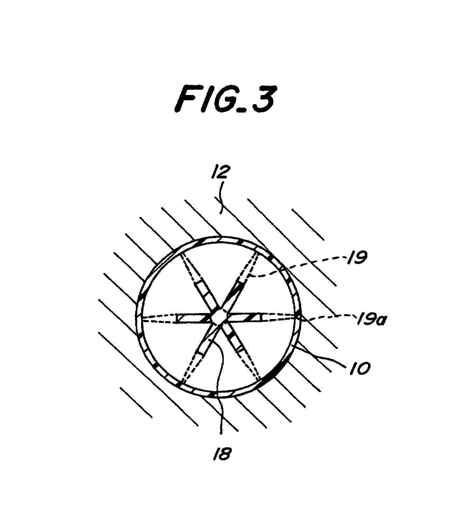

At an interface at which the upper end face of the core 16 contacts the lower face of the end disc 11 of the upper mold unit are radially formed runner grooves 18 into which the molten resin injected through the nozzle 6 of the injection molding device is distributed. Taper-like thinned gate holes 19 are provided in a tip end portion of the core such that the gate holes extend from the runner grooves 18 and communicate with the molding cavity 17 (See Fig. 3 as a sectional view of Fig. 2 along III-III). The gate hole 19 is inclined to reach a gate opening 19a which is opened at a position that is under a portion of the molding cavity for the mouth portion 10a of the cylindrical article and axially inwardly separated from the upper end of the insert 32 arranged at the inner peripheral surface of the molding cavity.

A pin hole is provided axially in a central portion of the core 16 from an upper end to a lower end thereof, and communicates with the injection opening 11 a of the end disc 11. The pin hole comprises a small-diameter hole portion, an intermediate-diameter hole portion and a large-diameter hole portion from upper to lower sides in this order. A knock-out pin 23, which comprises a small-diameter portion 23a and a large-diameter portion 23b, is closely and slidably fitted into the pin hole such that the small-diameter portion 23a and the large-diameter portion 23b are located in the small-diameter hole portion and the large-diameter hole portion, respectively.

An article in which the insert 32 is insertion-molded at a surface of a thin cylindrical molded body 10 is obtained with use of the above-constructed molding mold by injection molding as follows.

First, the mouth portion-molding unit 12, which is a split mold unit for molding the mouth portion 10a of the cylindrical article 10 is closed from right and left sides and connected with respect to the upper end face of the barrel portion-molding mold unit 13, which is the pull-out mold unit having a cylindrical inner face. Then, the end disc 11 of the upper molding mold unit which engages with the nozzle of the injection molding device is fitted to the mouth portion-molding mold unit, and the cylindrical stopper mold unit 14 is fitted to the lower end portion of the barrel portion-molding unit 13. Thereby, the outer mold unit 1 of the molding mold is formed.

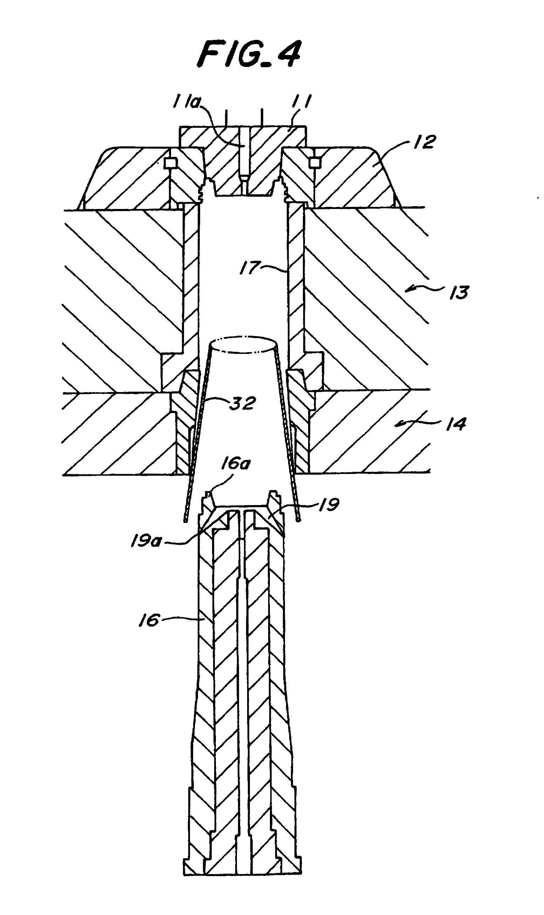

Next, as shown in Fig. 4, a thin insert 32 such as a label, which is rounded in a cylindrical or conical shape, is inserted into an appropriate position in the barrel portion-molding mold unit 13 of the outer mold unit 1 from a lower opening of the stopper mold unit 14 by hands or any other appropriate means, and then released. Consequently, since the outwardly opened gentle taper face is formed at the inner face of the stopper 14, the insert 32 is held at the inner face of the outer mold unit 1 along the taper surface in the state that the insert is extended slightly outwardly in a frusto-conical shape along the above taper surface.

At that time, the insert 32 such as the label is inserted such that a joint end face 12a of both sides of the insert 32 may not be coincident with the gate opening 9a of the gate hole 9 directed toward the upper end of the core 16.

In this way, when the core 16 as the inner mold unit is moved forwardly into the barrel portion-molding mold unit 13 of the outer mold unit from the lower opening of the stopper mold unit 14 in the state that the insert 32 is held at the inner surface of the barrel portion-molding mold unit 13 of the outer mold unit, the core 16 closely contacts the inner surface of the insert 32, and pushes the insert into the barrel portion-molding mold unit 13. When the tip portion 16a of the core 16 is advanced and contacts the end disc 11 of the upper molding mold unit, the insert 32 is extended to closely fit to the inner surface of the outer mold unit. Consequently, a molding cavity 17 having a small gap is formed between the outer mold 1 and the core 16 for the formation of the thin cylindrical body 10, and the molding mold is now closed as shown in Fig. 2.

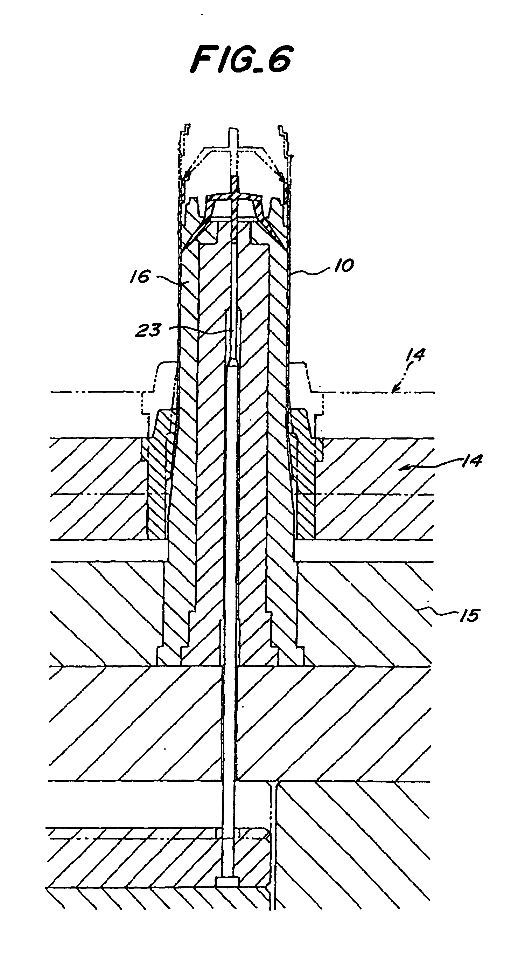

As mentioned above, the insert 32 is pushed along the inner surface of the mold unit with a frictional force upon contacting the outer surface of the core 16, and the tip portion 16a of the core 16 contacts a cylindrical head-forming portion of the molding unit 12 for the formation of the mouth portion 10a of the cylindrical body 10. Simultaneously, the lower end portion contacts the end portion of the stopper mold unit 14, so that the core fits into the outer mold unit 1 to close the molding mold. Accordingly, even the thin insert such as label in a frusto-conical shape can be accurately set as shown in Figs. 2 and 6 without being bent or wrinkled, which enables insertion molding.

The nozzle 6 of the injection molding device is fitted to the injection opening 11 a of the end disc 11 of the molding mold in the state that the molding mold is closed in this manner and that the knock-out pin 23 is located at a position shown in Fig. 2, and then the molten resin is injected into the molding cavity 17 through the nozzle 6 by driving an injection screw of the injection molding device not shown. At that time, the molten resin injected flows the gate holes 19 through the runner grooves 18, and is injected into the cavity of the molding mold through the gate openings 19a.

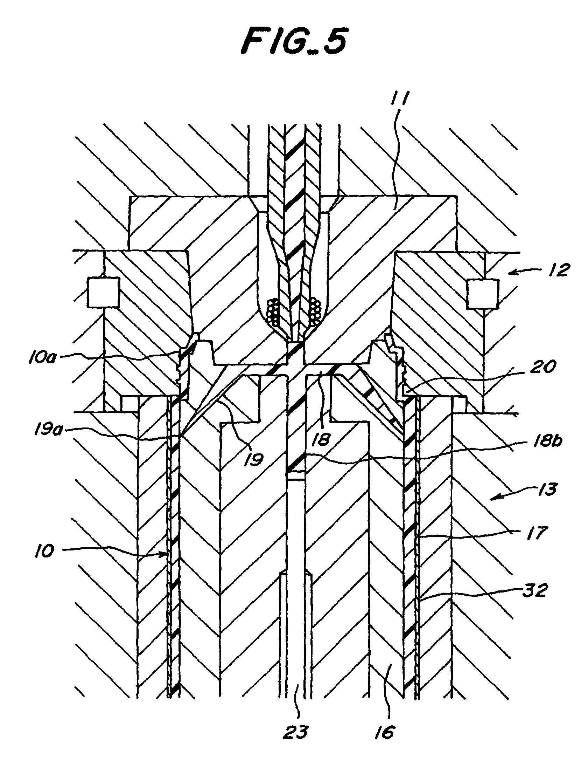

More specifically, as shown in Fig. 5, the molten resin flows into the cavity through the gate openings 19a that is opened at a location axially inwardly spaced from the upper end 12a of the insert 32 under the mouth portion 10a of the cylindrical article 10, and while the molten resin flow pushes the insert 32 set in the cavity to the inner surface of the barrel portion-molding mold unit 13 of the outer mold unit, the flow is distributed to a mouth portion side and a lower end portion to fill the cavity. As a result, the molten resin is molded integrally with the insert. Thus, the molten resin does not flow onto the front side of the insert 32.

After the molten resin is cooled and cured, following the injection molding, the molding mold is opened to remove the article.

First, simultaneously with retracting the injection molding device from the mold, the end disc 11 of the upper molding mold is moved rearwardly to disengage the core 16 from the mouth portion-molding unit 12. Then, the split mold unit of the mouth portion-molding mold 12 is opened to right and left, and then the barrel portion-molding mold unit 13 is upwardly moved, thereby exposing the outer face of the cylindrical article 10. See Fig. 6.

Next, as shown in Fig. 6, the knock-out pin 23 is upwardly moved to knock a runner end 18b, so that a cured resin piece inside the gate openings is separated and pushed away from the gate holes inside the gate openings with the resulting impact force. A the same time, the lower end portion 10c of the cylindrical article 10 is pushed up by upwardly moving the stopper mold unit 14. By so doing, the cylindrical article is released from the outer peripheral surface of the core, and discharged outside the molding mold in the form of an insert-bonded cylindrical molded article as shown in Fig. 7.

As shown in Fig. 7, the cylindrical molded article has the label 32 bonded to the entire surface of the barrel portion, excluding the mouth portion 10a thereof. Completely no resin is attached to the surface of the label, or no wrinkle is recognized thereon. A slight mark 10b of the gate opening only is recognized at the rear side of the cylindrical article 20 at a location deviated from a butted end face 32b of the label.

As explained above, according to the present invention, the insert such as label is integrated with the thin cylindrical article having almost no escape taper surface by the insertion injection molding method, and the injection gate opening of the molding mold is provided in the cylindrical article-molding portion at the position slightly inwardly spaced from the end portion of the insert and inward from the opposite side portions thereof, and the molten resin is injected into the cavity through the gate opening and insertion-molded therein. By so doing, the molten resin is insertion-molded in the state that the insert such as the label is pushed and closely fitted to the inner surface of the outer mold unit with the pressure of the resin. Therefore, the molten resin is prevented from going onto the surface of the label.

It is essential to set the label or the like in the cavity such that the end face or the butted face of the opposite end portions of the insert such as the cylindrical label may not be coincident with the gate opening of the core. If the insert is set in such a state that the end face or the butted face of the opposite side portions of the label or the like is coincident with the gate opening of the core, this is likely to produce an unacceptable article through the injected molten resin entering between the surface of the label and the inner surface of the outer mold unit through the end face of the insert.

Since the outer mold unit and the core for the formation of the barrel portion of the cylindrical body are constituted as the cylindrical split structure in the molding mold according to the present invention, no parting line of the molding mold is formed on the surface of the molded article. Further, the molding cavity for the formation of the thin cylindrical body is defined between the cylindrical outer mold unit and the columnar core inserted therein. Therefore, when the thin insert such as the label is inserted in a cylindrically rounded shape into a middle portion of the outer mold unit and the core is then inserted into the outer mold unit, the insert is contacted and held at the surface of the core, pushed into the cavity, and set at the predetermined position. Therefore, the insert can be easily set, without being needed to be set by using a special means for feeding the label or the like as in the prior art.

When the molding method according to the present invention is used, a film or the like in which printing has been separately effected may be used as the insert such as the label. Therefore, the insert may be preliminarily printed by offset printing, gravure printing or the like. Further, the present invention is also suitable for a case using a metallic surface treatment with gold, silver or the like in combination. As compared with a case where the molded body is directly printed, almost no deviation occurs in the indicating location.

As mentioned above, the present invention has the following effects.

The sheet-shaped insert-bonded cylindrical article comprises a cylindrical molded body, and an insert bonded to an outer peripheral surface of a barrel portion of the cylindrical molded body on molding, wherein a mark of an injection gate opening is positioned at an inner peripheral surface of the cylindrical molded body while being inwardly apart from an upper end of the insert in an axial direction and at a position corresponding to an inner portion of the insert as viewed in width directions from opposite sides of the insert. Therefore the article has excellent appearance. Further, if a laminated film is used as the insert, the insert-bonded cylindrical molded article having excellent light-shielding property and gas barrier property can be obtained.

According to the method for insertion molding the insert-bonded cylindrical article, the insert is fitted, closely attached and held along the inner peripheral surface of the outer molding unit having the cylindrical pull-out mold unit in the molding cavity defined between the outer mold unit and the core inside the injection molding mold, the molten resin is injected, through the injection gate opening provided in the core, toward the inner peripheral surface of the molded body at a position inwardly apart from an upper end of the insert in an axial direction and corresponding to an inner portion as viewed in width directions from opposite sides of the insert, the cylindrical molded body is cured and formed while the insert is being pushed onto the inner peripheral surface of the outer molding unit with the molten resin. Therefore, the molten resin does not flow onto the outer surface of the insert or wrinkled, if the insert is strongly attracted onto the surface of the cavity under vacuum as in the prior art. Therefore, the insertion molding is possible with respect to the thin insert.

The apparatus of the present invention for molding an insert-bonded cylindrical article comprising a cylindrical molded body and an insert integrally bonded to an outer peripheral surface of a barrel body of the cylindrical molded body, said apparatus comprising an outer mold unit having a cylindrical pull-out mold unit and defining a core-inserting space therein, a core to be inserted into the core-inserting space of the outer molding unit from one end thereof and to define a molding cavity between an inner peripheral surface of the core-molding space, and a releasing tool for releasing the shaped insert-bonded cylindrical article from the mold, the outer molding unit comprising a barrel portion-molding mold unit having said core-inserting space and an end portion-molding mold unit to be engaged with the barrel portion-molding mold unit at the other end of the outer mold unit, having a molten resin-injecting opening and being capable of moving outside from an end portion, and the core having a gate hole communicating with the molten resin-injecting opening at one end, having the other end that is at the outer peripheral surface of the core and axially inwardly from the end portions of the insert fitted along the outer peripheral surface of the core-inserting space and at an inner portion of the insert located inwardly from both width sides of the insert. In addition to the above-mentioned effects, the molding apparatus according to the present invention in which the outer mold unit of the molding mold has the fundamental structure of the cylindrical pull-out structure, not the split structure, for insertion molding with the insert such as the label, has the advantages that the article having beautiful appearance with no parting line appears at the surface of thereof can be obtained, while its rigidity is enhanced to reduce the amount of the resin.

## Claims

1. A sheet-shaped insert-bonded cylindrical article (10) molded by insertion molding, comprising a cylindrical molded body, and an insert bonded to an outer peripheral surface of a barrel portion of the cylindrical molded body on molding, **characterised in that** a mark of an injection gate opening (19a) is positioned at an inner peripheral surface of the cylindrical molded body while being inwardly apart from an upper end of the insert (32) in an axial direction and at a position corresponding to an inner portion of the insert as viewed in width directions from opposite sides of the insert.

2. The label-attached cylindrical article set forth in claim 1, wherein the insert is bonded to a circumferentially entire outer peripheral surface of the cylindrical molded body, and the mark of the injection gate opening (19a) is located in a position avoiding a butted portion of both side portions of the insert.

3. A method for insertion-molding an insert-bonded cylindrical article by insertion molding with use of an insertion injection molding mold (52) comprising an outer mold unit having a pull-out mold unit and defining a core-inserting space therein, and a core (16) to be inserted and fitted into the outer molding unit, said method comprising fitting, closely attaching and holding an insert along an inner peripheral surface of the outer molding unit in a molding cavity defined between the outer mold unit and the core inside the injection molding mold, injecting a molten resin, through an injection gate opening provided in the core, toward an inner peripheral surface of the molded body at a position inwardly apart from an upper end of the insert (32) in an axial direction and corresponding to an inner portion as viewed in width directions from opposite sides of the insert, curing and forming the cylindrical molded body while pushing the insert onto the inner peripheral surface of the outer molding unit with the molten resin, and thereby producing the insert-bonded cylindrical article comprising the molded body and the insert integrally bonded to an outer peripheral surface of a barrel portion of the cylindrical molded body, **characterised in that** the injection gate is located at the outer peripheral surface of the core and axially inwardly from the end portions of the insert.

4. The molding method set forth in claim 3, wherein the insert is fitted, closely attached and held along a circumferentially entire inner peripheral surface of the cavity of the outer molding unit, and the molten resin is injected toward a position avoiding a butted portion of both side portions of the insert.

5. The molding method set forth in claim 3 or 4, wherein a knock-out pin (23) is provided in the core (16) and which further comprising upwardly pulling out the pull-out mold unit of the outer mold unit after the insertion molding, cutting connection between the cured resin inside the injection gate opening (19a) and the cylindrical molded body by raising the knock-out pin (23), and removing the cylindrical article from the core by pushing a bottom portion of the cylindrical molded body.

6. The molding method set forth in any one of claims 3 to 5, wherein the insert is fitted, closely attached and held in a cylindrical shape along the inner peripheral surface of the outer mold unit in the molding cavity (17) inside the injection molding mold by partially fitting the insert in a cylindrical shape into the outer mold unit of the mold in a state that the core (16) of the injection molding mold is pulled out from the outer mold unit and the molding cavity (17) is opened, forwardly moving the core into the outer mold unit, and applying a contact frictional force between the core (16) and the insert (10).

7. An apparatus for molding an insert-bonded cylindrical article (10) comprising a cylindrical molded body and an insert integrally bonded to an outer peripheral surface of a barrel body of the cylindrical molded body, said apparatus comprising an outer mold unit having a cylindrical pull-out mold unit and defining a core-inserting space therein, a core to be inserted into the core-inserting space of the outer molding unit from one end thereof and to define a molding cavity (17) between an inner peripheral surface of the core-molding space, and a releasing tool for releasing the shaped insert-bonded cylindrical article from the mold, the outer molding unit comprising a barrel portion-molding mold unit (13) having said core-inserting space and an end portion-molding mold unit to be engaged with the barrel portion-molding mold unit at the other end of the outer mold unit, having a molten resin-injecting opening (11a) and being capable of moving outside from an end portion, **characterised in that** the core has a gate hole (19) communicating with the molten resin-injecting opening at one end, having the other end that is at the outer peripheral surface of the core (16) and axially inwardly from the end portions of the insert (32) fitted along the outer peripheral surface of the core-inserting space and at an inner portion of the insert located inwardly from both width sides of the insert.

8. The molding apparatus set forth in claim 7, wherein the insert-bonded cylindrical article has a mouth portion (10a), and the end portion-molding mold unit comprises a molding mold end disc (11), as the pull-out mold unit, having a molten resin-injecting opening (11a), and a mouth portion mold unit (12) to be engaged with the mold end disc (11) and form the mouth portion (10a) of the cylindrical article.

9. The molding apparatus set forth in claim 7 or 8, wherein radial molten resin runner grooves (18) are formed at a joint face between one end of the core (16) and the end portion-molding mold unit, and one end opening of the gate hole (19a) is to communicate with end portions (18a) of the running grooves.

10. The apparatus set forth in any one of claims 7 to 9, wherein the outer mold comprising a stopper mold (14) movable axially and adapted to form the other end of the cylindrical molded body, and the releasing tool is said stopper mold (14).

11. The apparatus set forth in any one of claims 7 to 10, wherein the releasing tool further comprises a knockout pin (23) provided movably forwardly and rearwardly in a central portion of the core (16), and connection between the cured resin inside the injecting gate opening (19a) and the cylindrical molded body is cut by raising the knockout pin (23).

## Patentansprüche

1. Flächenförmiger, einsatzgebundener, zylindrischer Gegenstand (10), der durch Einsatzformung geformt ist, mit einem zylindrischen, geformten Körper und einem Einsatz, der beim Formen an einer äußeren peripheren Oberfläche eines Trommelabschnittes des zylindrischen, geformten Körpers gebunden wird, **dadurch gekennzeichnet, dass** eine Markierung einer Einspritzdurchlassöffnung (19a) an einer inneren peripheren Oberfläche des zylindrischen, geformten Körpers angeordnet ist, während sie, wenn in Querschnittsrichtungen von gegenüber liegenden Seiten des Einsatzes aus gesehen wird, in einer axialen Richtung im Inneren von einem oberen Ende des Einsatzes (32) entfernt ist und sich an einer Stelle befindet, die einem inneren Abschnitt des Einsatzes entspricht.

2. Zylindrischer Gegenstand mit angebrachtem Etikett nach Anspruch 1, wobei der Einsatz an einer umfänglichen, vollständig äußeren peripheren Oberfläche des zylindrischen, geformten Körpers gebunden ist und sich die Markierung der Einspritzdurchlassöffnung (19a) in einer Position befindet, in der ein angrenzender Abschnitt von beiden Seitenabschnitten des Einsatzes vermieden wird.

3. Verfahren zum Einsatzformen eines einsatzgebundenen zylindrischen Gegenstandes durch Einsatzformung mittels einer Form (52) zum Einsatz-Spritzformen mit einer äußeren Formeinheit, die eine Abziehformeinheit aufweist und darin einen Raum zum Kerneinsetzen begrenzt, und mit einem Kern (16), der in die äußere Formeinheit einsetzbar und einpassbar ist, wobei das Verfahren ein Anpassen, dichtes Anbringen und Halten eines Einsatzes entlang einer inneren peripheren Oberfläche der äußeren Formeinheit in einem Formhohlraum, der von der äußeren Formeinheit und dem innerhalb der Spritzgussform angeordneten Kern begrenzt wird, Einspritzen eines geschmolzenen Harzes durch eine in dem Kern vorgesehene Einspritzdurchlassöffnung gegen eine innere periphere Oberfläche des geformten Körpers an einer Stelle, die, wenn in Querschnittsrichtungen von gegenüberliegenden Seiten des Einsatzes aus gesehen wird, in einer axialen Richtung von einem oberen Ende des Einsatzes (32) nach Inneren entfernt ist und einem inneren Abschnitt des Einsatzes entspricht, Aushärten und Ausbilden des zylindrischen, geformten Körpers, während der Einsatz mit dem geschmolzenen Harz auf die innere periphere Oberfläche der äußeren Formeinheit gedrückt wird, und hierdurch Herstellen des einsatzgebundenen zylindrischen Gegenstandes, der den geformten Körper und den einstückig mit einer äußeren peripheren Oberfläche eines Trommelabschnittes des zylindrischen, geformten Körpers gebundenen Einsatz aufweist, **dadurch gekennzeichrret, dass** der Einspritzdurchlass an der äußeren peripheren Oberfläche des Kernes und axial nach innen von den Endabschnitten des Einsatzes angeordnet ist.

4. Formverfahren nach Anspruch 3, wobei der Einsatz entlang einer umfänglich vollständig inneren peripheren Oberfläche des Hohlraumes der äußeren Formeinheit eingepasst, nahe angebracht und gehalten wird und wobei das geschmolzene Harz in Richtung auf eine Stelle eingespritzt wird, in der ein angrenzender Abschnitt der beiden Seitenabschnitte des Einsatzes vermieden wird.

5. Formverfahren nach Anspruch 3 oder 4, wobei ein Ausstoßstift (23) in dem Kern (16) vorgesehen ist und welches weiterhin ein nach oben Abziehen der Abziehformeinheit der äußeren Formeinheit nach dem Einsatzformen, ein Durchschneiden der Verbindung zwischen dem ausgehärteten Harz innerhalb der Einspritzdurchlassöffnung (19a) und dem zylindrischen, geformten Körper durch Hochheben des Ausstoßstiftes (23) und ein Entfernen des zylindrischen Gegenstandes von dem Kern durch Drücken eines Bodenabschnittes des zylindrischen, geformten Körpers vorsieht.

6. Formverfahren nach einem der Ansprüche 3 bis 5, wobei der Einsatz eingepasst, dicht angebracht und gehalten ist in einer zylindrischen Gestalt entlang der inneren peripheren Oberfläche der äußeren Formeinheit in dem Formhohlraum (17) innerhalb der Spritzgussform durch teilweises Anpassen des Einsatzes in einer zylindrischen Gestalt in die äußere Formeinheit der Form in einer Lage, in der der Kern (16) der Spritzgussform aus der äußeren Formeinheit herausgezogen ist und der Formhohlraum (17) geöffnet ist, wobei der Kern vorwärts in die äußere Formeinheit bewegt wird und eine Kontaktreibungskraft zwischen dem Kern (16) und dem Einsatz (10) ausgeübt wird.

7. Vorrichtung zum Formen eines einsatzgebundenen zylindrischen Gegenstandes (10) mit einem zylindrischen, geformten Körper und einem Einsatz, der einstückig mit einer äußeren peripheren Oberfläche eines Trommelkörpers des zylindrischen, geformten Körpers gebunden ist, wobei die Vorrichtung eine äußere Formeinheit, die mit einer zylindrischen Abziehformeinheit versehen ist und in dieser einen Raum zum Einsetzen des Kerns definiert, einen Kern, der von einem seiner Enden in den Raum zum Kerneinsetzen der äußeren Formeinheit einsetzbar ist und der einen Formhohlraum (17) zwischen einer inneren peripheren Oberfläche des Kernformungsraumes begrenzt, sowie ein Freigabewerkzeug zum Freigeben des geformten, einsatzgebundenen, zylindrischen Gegenstandes von der Form aufweist, wobei die äußere Formeinheit eine Formeinheit (13) zum Formen eines Trommelabschnittes aufweist, welcher mit dem Raum zum Kerneinsetzen und einer Formeinheit zum Endabschnittformen versehen ist, um mit der Formeinheit zum Formen des Trommelabschnittes an dem anderen Ende der äußeren Formeinheit anzugreifen, wobei sie eine Öffnung (11a) zum Einspritzen von geschmolzenem Harzes aufweist und aus einem Endabschnitt nach außen bewegbar ist, **dadurch gekennzeichnet, dass** der Kern ein Angussloch (19) aufweist, das mit der Öffnung zum Einspritzen geschmolzenen Harzes an einem Ende gebunden ist, und ein anderes Ende aufweist, welches sich an der äußeren peripheren Oberfläche des Kernes (16) befindet und sich axial nach innen von den Endabschnitten des Einsatzes (32) erstreckt, und das entlang der äußeren peripheren Oberfläche des Raumes zum Kerneinsetzen eingepasst ist und an einem inneren Abschnitt des Einsatzes von beiden Querschnittsseiten des Einsatzes aus nach innen angeordnet ist.

8. Formvorrichtung nach Anspruch 7, wobei der einsatzgebundene zylindrische Gegenstand mit einem Öffnungsabschnitt (10a) versehen ist und die Formeinheit zum Endabschnittformen eine formende Formendscheibe (11), als eine Abziehformeinheit, mit einer Öffnung (11a) zum Einspritzen von geschmolzenem Harz und eine Mündungsabschnittsformeinheit (12) aufweist, um mit der Formendscheibe (11) in Angriff zu stehen und den Mündungsabschnitt (10a) des zylindrischen Gegenstandes zu bilden.

9. Formvorrichtung nach Anspruch 7 oder 8, wobei radiale Angusskanäle (18) für geschmolzenes Harz an einer Verbindungsstirnfläche zwischen einem Ende des Kernes (16) und der Formeinheit zum Endabschnittformen ausgebildet sind und eine Endöffnung des Angussloches (19a) in Verbindung mit Endbereichen (18a) der Angusskanäle steht.

10. Vorrichtung nach einem der Ansprüche 7 bis 9, wobei die äußere Form eine Anschlagsform (14) aufweist, die axial bewegbar ist und angepasst ist, um das andere Ende des zylindrischen, geformten Körpers zu formen, und wobei das Freigabewerkzeug die Anschlagsform (14) bildet.

11. Vorrichtung nach einem der Ansprüche 7 bis 10, wobei das Freigabewerkzeug weiterhin einen Ausstoßstift (23) aufweist, der vorwärts und rückwärts bewegbar in einem zentralen Abschnitt des Kernes (16) vorgesehen ist, und wobei eine Verbindung zwischen dem ausgehärteten Harz innerhalb der Einspritzdurchlassöffnung (19a) und dem zylindrischen, geformten Körper durch Anheben des Ausstoßstiftes (23) durchgeschnitten wird.

## Revendications

1. Article cylindrique à pièce d'insertion immobilisée en forme de feuille (10) moulé par moulage par insertion, comprenant un corps cylindrique moulé et une pièce d'insertion liée à une surface périphérique d'une partie de tonneau du corps cylindrique moulé lors du moulage, **caractérisé en ce qu'**une marque d'une ouverture de porte d'injection (19a) est placée au niveau d'une surface périphérique interne du corps cylindrique moulé tout en étant séparé vers l'intérieur d'une extrémité supérieure de la pièce d'insertion (32) dans une direction axiale et à une position correspondant à une partie interne de la pièce d'insertion telle qu'on la voit dans la direction de la largeur depuis les côtés opposés de la pièce d'insertion.

2. Article cylindrique à étiquette attachée selon la revendication 1, dans lequel la pièce d'insertion est liée à une surface périphérique externe circonférentiellement entière du corps cylindrique moulé, et la marque de l'ouverture de porte d'injection (19a) est située dans une position évitant une partie aboutée des deux parties latérales de la pièce d'insertion.

3. Procédé de moulage par insertion d'un article cylindrique à pièce d'insertion immobilisée par moulage par insertion avec utilisation d'un moule de moulage par injection à insertion (52) comprenant une unité de moule extérieure ayant une unité de tirage de moule et définissant un espace d'insertion de noyau dans celui-ci, et un noyau (16) à insérer et fixer dans l'unité de moulage extérieure, ledit procédé comprenant l'installation, la fixation et le maintien ferme d'un insert le long d'une surface périphérique intérieure de l'unité de moulage extérieure dans une cavité de moulage définie entre l'unité de moulage extérieure et le noyau à l'intérieur du moule de moulage par injection, l'injection d'une résine fondue, à travers une ouverture de porte d'injection fournie dans le noyau, vers une surface périphérique intérieure du corps moulé en une position séparée vers l'intérieur d'une extrémité supérieure de l'insert (32) dans une direction axiale et correspondant à une partie intérieure telle qu'elle est vue dans les directions de largeur depuis les côtés opposés de l'insert, le séchage et le formage du corps moulé cylindrique tout en poussant l'insert sur la surface périphérique intérieure de l'unité de moulage extérieure avec la résine fondu, et produisant ainsi l'article cylindrique à pièce d'insertion immobilisée comprenant le corps moulé et l'insert intégralement lié à une surface périphérique extérieure d'une partie de tonneau du corps moulé cylindrique, **caractérisé en ce que** la porte d'injection est située au niveau de la surface périphérique extérieure du noyau et axialement vers l'intérieur depuis les parties d'extrémité de l'insert.

4. Procédé de moulage selon la revendication 3, dans lequel l'insert est installé, fermement attaché et maintenu le long d'une surface périphérique intérieure circonférentiellement entière de la cavité de l'unité de moulage extérieure, et la résine fondue est injectée vers une position évitant une partie aboutée des deux parties latérales de l'insert.

5. Procédé de moulage selon la revendication 3 ou 4, dans lequel une broche d'éjecteur (23) est fournie dans le noyau (16) et qui comprend en outre le tirage vers le haut de l'unité de tirage du moule de l'unité de moule extérieure après le moulage par insertion, le coupage de la connexion entre la résine séchée à l'intérieur de l'ouverture de porte d'injection (19a) et le corps moulé cylindrique en élevant la broche d'éjecteur (23), et l'enlèvement de l'article du noyau en poussant une partie de fond du corps moulé cylindrique.

6. Procédé de moulage selon l'une quelconque des revendications 3 à 5, dans lequel l'insert est installé, fermement attaché et maintenu en une forme cylindrique le long de la surface périphérique interne de l'unité de moule extérieure dans la cavité de moulage (17) à l'intérieur du moule de moulage par injection en installant partiellement l'insert ayant une forme cylindrique dans l'unité de moule extérieure du moule dans un état dans lequel le noyau (16) du moule pour moulage par injection est tiré de l'unité de moule intérieure et la cavité de moulage (17) est ouverte, en déplaçant le noyau vers l'avant dans l'unité de moule extérieure et en appliquant une force frictionnelle de contact enter le noyau (16) et l'insert (10).

7. Appareil de moulage d'un article cylindrique à pièce d'insertion immobilisée (10) comprenant un corps moulé cylindrique et un insert intégralement lié à une surface périphérique extérieure d'un corps de tonneau du corps moulé cylindrique, ledit appareil comprenant une unité de moule extérieure ayant une unité de tirage de moule cylindrique et définissant un espace d'insertion du noyau dans celui-ci, un noyau à insérer dans l'espace d'insertion du noyau de l'unité de moulage extérieure depuis une extrémité de celui-ci et pour définir une cavité de moulage (17) entre une surface périphérique intérieure de l'espace de moulage du noyau, et un outil de libération pour libérer du moule l'article cylindrique à pièce d'insertion immobilisée formé, l'unité de moulage extérieure comprenant une unité de moule pour le moulage de la partie de tonneau (13) ayant ledit espace d'insertion du noyau et une unité de moule pour le moulage de la partie d'extrémité destinée à venir en prise avec l'unité de moule pour le moulage de la partie de tonneau au niveau de l'autre extrémité de l'unité de moulage extérieure, ayant une ouverture d'injection de la résine fondue (11a) et étant capable de se déplacer à l'extérieur depuis la partie d'extrémité, **caractérisé en ce que** le noyau a un orifice de porte (19) communiquant avec l'ouverture d'injection de la résine fondue au niveau d'une extrémité, ayant l'autre extrémité qui est au niveau de la surface périphérique extérieure du noyau (16) et axialement vers l'intérieur depuis les parties d'extrémité de l'insert (32) placées le long de la surface périphérique extérieure de l'espace d'insertion du noyau et au niveau d'une partie intérieure de l'insert située vers l'intérieur depuis les deux côtés de largeur de l'insert.

8. Appareil de moulage selon la revendication 7, dans lequel l'article cylindrique à pièce d'insertion immobilisée a une partie de bouche (10a) et l'unité de moule pour le moulage de la partie d'extrémité comprend un disque d'extrémité de moule pour le moulage (11), comme unité de tirage de moule, ayant une ouverture d'injection de la résine fondue (11a) et une unité de moule de la partie de bouche (12) destinée à venir en prise avec le disque d'extrémité du moule (11) et forme la partie de bouche (10a) de l'article cylindrique.

9. Appareil de moulage selon la revendication 7 ou 8, dans lequel des rainures radiales d'écoulement de la résine fondue (18) sont formées au niveau d'une face de joint entre une extrémité du noyau (16) et l'unité de moule pour le moulage de la partie d'extrémité, et une ouverture d'extrémité de l'orifice de porte (19a) est destinée à communiquer avec les parties d'extrémité (18a) des rainures d'écoulement.

10. Appareil selon l'une quelconque des revendications 7 à 9, dans lequel le moule extérieur comprenant un moule butoir (14) pouvant être déplacé axialement et adapté pour former l'autre extrémité du corps moulé cylindrique et l'outil de libération est le moule butoir (14).

11. Appareil selon l'une quelconque des revendications 7 à 10, dans lequel l'outil de libération comprend en outre une broche d'éjecteur (23) fournie de manière mobile vers l'avant et vers l'arrière dans une partie centrale du noyau (16) et la connexion entre la résine séchée à l'intérieur de l'ouverture de la porte d'injection (19a) et le corps moulé cylindrique est coupée par l'élévation de la broche d'éjecteur (23).
